# EUROPÄISCHE PATENTSCHRIFT

(11) **EP 1 405 194 B1**
(45) Veröffentlichungstag und Bekanntmachung des Hinweises auf die Patenterteilung: **03.11.2004**
(21) Anmeldenummer: 02753004.7
(22) Anmeldetag: 09.07.2002
(51) Int. Cl.: G06F 13/42

(54) **VERFAHREN ZUR ÜBERTRAGUNG VON DATEN ÜBER EINE DATENÜBERTRAGUNGSEINHEIT UND DATENVERARBEITUNGSANLAGE**
METHOD FOR TRANSMITTING DATA VIA A DATA TRANSMISSION UNIT AND DATA PROCESSING SYSTEM
PROCEDE POUR TRANSMETTRE DES DONNEES PAR L'INTERMEDIAIRE D'UNE UNITE DE TRANSMISSION DE DONNEES ET SYSTEME DE TRAITEMENT DE DONNEES

(30) Priorität: 10.07.2001 DE 10133500
(43) Veröffentlichungstag der Anmeldung: 07.04.2004
(73) Patentinhaber: SIEMENS AKTIENGESELLSCHAFT, 80333 München (DE)
(72) Erfinder: ABERT, Michael, 76474 Au (DE)
(86) Internationale Anmeldenummer: PCT/DE2002/002515
(87) Internationale Veröffentlichungsnummer: WO 2003/007165

(56) Entgegenhaltungen:
- EP-A- 1 081 601
- WO-A-01/31833
- GB-A- 2 062 419
- US-A- 6 160 842
- US-B1- 6 233 635

## Beschreibung

Die Erfindung betrifft ein Verfahren zur Übertragung von Daten über eine Datenübertragungseinheit zwischen Datenverarbeitungseinheiten einer Datenverarbeitungsanlage, z. B. einer speicherprogrammierbaren Steuerung zur Automatisierung einer technischen Anlage, insbesondere einer Maschine, einer Fertigungs- oder Kraftwerksanlage. Sie betrifft weiter eine Datenverarbeitungsanlage.

Datenverarbeitungsanlagen finden vielseitige Anwendung im Rahmen von industriellen Automatisierungsprozessen. Dabei sind in komplexen technischen Anlagen eine Mehrzahl von Datenverarbeitungseinheiten zu aufwendigen Computer- und Datennetzen anhand eines Datenübertragungssystems mittels mindestens einer Datenübertragungseinheit verbunden. Zur Bedienung und/oder Beobachtung der die Anlage steuernden Datenverarbeitungseinheiten sind üblicherweise so genannte Operatorstationen oder Bedien- und Beobachtungseinheiten vorgesehen. Zur Steuerung und/oder Regelung der technischen Anlage umfasst jede Datenverarbeitungseinheit Datenverarbeitungsprogramme. Das Datenverarbeitungsprogramm lauft ublicherweise in den Datenverarbeitungseinheiten, z. B. in einer zentralen Steuereinheit sowie in dezentralen Vor-Ort-Steuerungen, der technischen Anlage ab und steuert unter anderem den Austausch von Daten über die Datentibertragungseinheit zwischen der zentralen Steuereinheit und Komponenten der technischen Anlage. Dabei werden vom Datenverarbeitungsprogramm einerseits Schaltbefehle oder Stellwerte an die Komponenten, wie Aktoren, übermittelt und andererseits Messdaten oder charakteristische Prozess- und/oder Betriebsparameter von den Komponenten, wie Sensoren, gelesen. Je nach Art und Aufbau dertechnischen Anlage kann es dabei auch zu einem Zugriff von einer Datenverarbeitungseinheit auf das Datenverarbeitungsprogramm einer anderen Datenverarbeitungseinheit kommen.

Beim Datenaustausch über das mindestens eine Datenübertragungseinheit umfassenden Datenübertragungssystem, z. B. einem Bussystem, werden üblicherweise so genannte Steuer-, Adress- und Datensignale in einer nach zeitlichen und pegelmäßigen Regeln vereinbarten Art und Weise, kurz Protokoll genannt, zwischen Kommunikationspartnern, z. B. zwischen Datenverarbeitungseinheiten, übertragen. Mit ständig steigender Komplexität der Datenverarbeitungsanlage durch eine stetig wachsende Anzahl von Funktionen, Sensoren und Aktoren nimmt die Vernetzung und somit der Austausch von Daten oder Informationen, wie Sensordaten und Steuerbefehle, zu. Das Kommunikations- oder Datenübertragungssystem muss dabei eine hohe Störsicherheit, insbesondere fur sicherheitsrelevante Funktionen, und eine besonders schnelle Datenübertragung erfüllen.

Zur Erzielung einer hohen Störsicherheit bei einer Kommunikation, insbesondere bei einer Kommunikation einer zentralen Steuerung mit prozessnahen, dezentralen Peripheriebaugruppen, werden die haten auf den Peripheriebaugruppen über ein Tiefpass-Filter gefuhrt. Hierdurch kommt es bei der Kommunikation zu einer Begrensung der Bandbreite, wodurch der Datenaustausch hinsichtlich Schnelligkeit und Datenumfang begrenzt ist. Daher wird ublicherweise zur Erzielung von hoheren Anforderungen an die Datenubertragung beispielsweise zwischen der zentralen Steuerung und den Peripheriebaugruppen oder der hoheren Anforderungen an eine Anschaltung zum Ethernet, Internet oder zu einem Massenspeicher eine immer schnellere Datenverbindung bzw. -ubertragung gefordert. Üblicherweise werden hierzu in dem Automatisierungssystem oder der Datenverarbeitungsanlage zusatzliche Bussysteme verwendet. Eine derartige Erweiterung des Datenübertragungssystems um weitere Bussysteme ist aber besonders aufwendig und hinsichtlich der Koordinierung des Datenaustauschs besonders komplex und wartungsintensiv.

Das Document EP-A- 1 081 601 offenbart ein Verfahren, wobei Daten mit einem Signalpegel und Synchronisationssignal mit einem zweiten Signalpegel übertragen werden.

Der Erfindung liegt daher die Aufgabe zugrunde, ein Verfahren zur Übertragung von Daten über eine Datenübertragungseinheit zwischen Datenverarbeitungseinheiten einer Datenverarbeitungsanlage anzugeben, welches eine besonders einfache, sichere und schnelle Übertragung ermöglicht. Eine weitere Aufgabe besteht darin, eine Datenverarbeitungsanlage zur digitalen Signalverarbeitung anzugeben.

Die erstgenannte Aufgabe wird erfindungsgemäß gelöst durch ein Verfahren zur Übertragung von Daten über eine Datenübertragungseinheit zwischen Datenverarbeitungseinheiten einer Datenverarbeitungsanlage, wobei Daten parallel in mindestens zwei Protokollen derart übertragen werden, dass anhand eines ersten Protokolls Daten in einem ersten Frequenzbereich mit einer ersten Signalfolge und einem ersten Signalpegel und anhand eines zweiten Protokolls weitere Daten in einem zweiten Frequenzbereich mit einer zweiten Signalfolge und einem zweiten Signalpegel übertragen werden. Hierdurch sind ein langsamer Datenaustausch und ein schneller Datenaustausch mit möglichst guter Störsicherheit über eine einzelne physische und somit gemeinsame Datenübertragungseinheit gegeben.

Die Erfindung geht dabei von der Überlegung aus, dass mit ständig steigendem Datenaufkommen und den daraus resultierenden steigenden Anforderungen bezuglich des Datenaufkommens beim Datenaustausch mit gleichzeitiger Einhaltung einer sehr hohen Storsicherheit und einem geringen hardwaremaßigen Aufwand eine bereits vorhandene oder eine einzelne physische Datenübertragungseinheit hinsichtlich deren Leistungsfähigkeit erhoht werden sollte. Hierzu sind fehlertolerante und deterministische Datenprotokolle mit hoher Datenintegrität erforderlich, welche die dem Datenaustausch zugrundeliegenden Daten entsprechend verschiedene Anforderungen mit unterschiedlichen Protokollzeiten selektieren und protokollmaßig bezüglich der Datenübertragung trennen. Dabei werden beim Datenaustausch die nur eine Protokollanforderung betreffenden Daten getrennt von Daten einer anderen Protokollanforderung berücksichtigt. Somit können die der einen betreffenden Protokollanforderung zugehörigen Daten getrennt von Daten anderer Protokollanforderungen über ein und dieselbe Datenübertragungseinheit unter flexibler Ausnutzung, einer die betreffende Datenübertragungseinheit charakterisierenden Bandbreite übertragen werden. Dazu werden die Daten entsprechend der zugrundeliegenden Anforderung, z. B. besonders hohe Datensicherheit bei gegebener Datenübertragungsrate oder besonders hohe Datenübertragungsrate bei geringerer Datensicherheit, gefiltert und in getrennten Protokollen hinsichtlich Zeit, Frequenz und Pegel übertragen. Somit werden bei einem Datenaustausch zwischen Datenverarbeitungseinheiten und/oder Bedien- und Beobachtungseinheiten betreffende, den Austausch bewirkende Telegramme entsprechend deren Störsicherheit und/oder deren Übertragungsrate, unter Berücksichtigung der Benutzung derselben Datenübertragungseinheit durch die Nutzung verschiedener Frequenzbereiche differenziert. Demzufolge wird bei einem Datenaustausch eine gegenseitige Beeinflussung der in verschiedenen Protokolle, insbesondere in verschiedenen Frequenzbereichen übertragenen Daten, sicher vermieden, so dass der Datenaustausch aller zu berücksichtigender Daten beschleunigt wird.

Zweckmäßigerweise werden die Daten des ersten Protokolls asynchron mit Quittungssignal (auch Signalhandshake genannt) übertragen. Die Daten des zweiten Protokolls werden bevorzugt synchron zum Quittungssignal übertragen. Hierdurch ist sichergestellt, dass insbesondere sicherheitsrelevante Daten mit einer besonders hohen Störsicherheit und somit Daten des ersten Protokolls unter Ausnutzung derselben Signale der betreffenden Datenübertragungseinheit getrennt von den Daten des zweiten Protokolls mit geringerer Störsicherheit übertragen werden. Dazu wird bei Anforderung eines Datenaustausches von schnelleren Daten, d. h. bei einem Verbindungsaufbau zwischen austauschenden Einheiten ein so genannter Quittierzyklus mittels Austausch des Quittungssignals ausgeführt, wobei zur Einhaltung der Störsicherheit lediglich das Anliegen des so genannten Ready-Signals für den Zeitraum des Datenaustauschs überprüft wird. Schaltet das Ready-Signal während des Datenaustauschs um, so wird das die Daten des zweiten Protokolls betreffende Telegramm als ungültig gewertet und verworfen.

Alternativ oder zusätzlich werden die Daten des zweiten Protokolls mit Sicherungsdaten versehen. Hierdurch ist sichergestellt, dass neben dem Quittungssignal anhand der Sicherungsdaten, wie beispielsweise anhand einer zyklischen Blockprüfung (so genannter cyclic redundancy check, kurz CRC genannt) oder eines Prüfbits im Datentelegramm (so genannter parity check), der Datenaustausch für die schnellen Daten des zweiten Protokolls auf Sicherheit geprüft wird.

Zweckmäßigerweise werden die Daten des ersten Protokolls mit einer Übertragungsrate von kleiner 20 MBit/s übertragen. Für eine besonders sichere Trennung der Daten des ersten Protokolls von den Daten des zweiten Protokolls werden diese vorteilhafterweise mit einer Ubertragungsrate von kleiner 640 MBit/s übertragen.

Fur eine möglichst gute Differenzierung von Daten mit verschiedenen Datenübertragungsraten und zur Vermeidung von daraus resultierenden Integrationseffekten bei der Übertragung auf ein und derselben Datenübertragungseinheit wird einem für das erste Protokoll vorgesehenen Treiber ein derartiger Schaltpegel zugeordnet, der symmetrisch um einen H-Pegel eines für das zweite Protokoll vorgesehenen Treibers angeordnet ist. Vorzugsweise wird dem Treiber für das erste Protokoll eine Schaltschwelle von 2,5 V mit einem High-Pegel von 5V und einem Low-Pegel von 0 V zugeordnet. Dem Treiber für das zweite Protokoll wird bevorzugt eine Schaltschwelle von 5 V mit einem High-Pegel von 6 V und einem Low-Pegel von 4 V zugeordnet.

Die zweitgenannte Aufgabe wird erfindungsgemäß gelöst durch eine Datenverarbeitungsanlage mit einer Mehrzahl von Datenverarbeitungseinheiten, welche über eine Datenübertragungseinheit miteinander verbunden sind, wobei Daten verschiedener Anforderungen auf der Datenübertragungseinheit parallel in mindestens zwei Protokollen derart übertragbar sind, dass sendeseitig anhand eines ersten Protokolls Daten in einem ersten Frequenzbereich mit einer ersten Signalfolge und einem ersten Signalpegel und anhand eines zweiten Protokolls weitere Daten in einem zweiten Frequenzbereich mit einer zweiten Signalfolge und einem zweiten Signalpegel übertragen werden, wobei empfangsseitig für die Daten ein dem jeweiligen Protokoll zugehöriges Filter vorgesehen ist. Durch die Auftrennung der Daten anhand der zugrundeliegenden Ubertragungsart mittels unterschiedlicher Protokolle, Frequenzen und Pegel und ein diese empfangsseitig berücksichtigendes. Filter ist gewährleistet, dass ein und dieselbe Datenübertragungseinheit für unterschiedliche Datenprotokolle verwendet werden kann. Hierdurch wird ein besonders komplexes und aufwendiges Datenübertragungssystem sicher vermieden.

Die mit der Erfindung erzielten Vorteile bestehen insbesondere darin, dass durch eine bandbreitenoptimierte Übertragung von unterschiedlichen Datenübertragungsraten aufweisenden Daten auf ein und derselben Datenubertragungseinheit eine besonders leistungsfähige Datenübertragungseinheit gewährleistet ist. Dabei kann ein bereits vorhandenes, für eine langsame und besonders storsichere Datenübertragung vorgesehenes Bussystem durch Definition eines schnelleren Protokolls unter Nutzung der gesamten Bandbreite des Bussystems gleichzeitig für eine Datenübertragung mit hoher Geschwindigkeit genutzt werden. Eine derartig ausgebildete Datenübertragungseinheit einer Datenverarbeitungsanlage ist insbesondere für eine konsistente und einfache Wartung geeignet und hinsichtlich der Verfügbarkeit sowie des Einsatzes als Automatisierungssystem in sicherheitsrelevanten Anlagen besonders wirtschaftlich und effektiv.

Ausführungsbeispiele der Erfindung werden anhand einer Zeichnung näher erläutert. Darin zeigen:
- FIG 1: schematisch eine Datenverarbeitungsanlage mit einer Mehrzahl von Datenverarbeitungseinheiten, welche über eine Datenübertragungseinheit verbunden sind,
- FIG 2A, 2B: schematisch Signalsequenzen für Daten mit einem ersten Protokoll und mit einem zweiten Protokoll.

Einander entsprechende Teile sind in beiden Figuren mit den gleichen Bezugszeichen versehen.

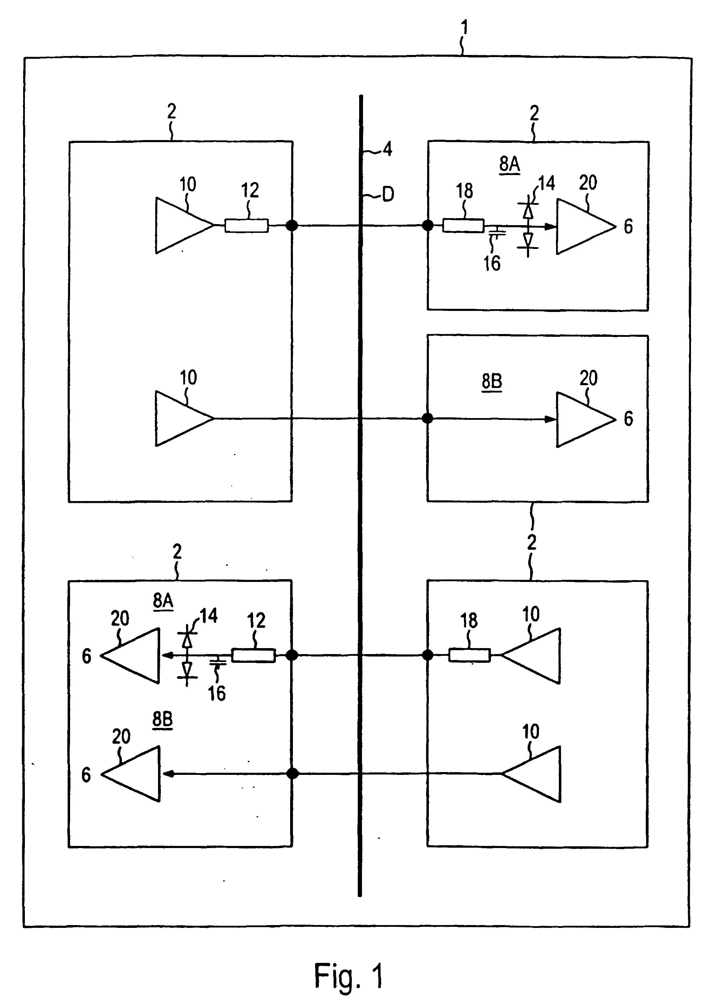

Die Figur 1 zeigt eine Datenverarbeitungsanlage 1 mit einer Mehrzahl von Datenverarbeitungseinheiten 2, welche über eine Datenübertragungseinheit 4 miteinander verbunden sind. Als Datenverarbeitungseinheit 2 dient beispielsweise eine speicherprogrammierbare Steuerung, ein Personal Computer oder eine andere Datenverarbeitungseinheit. Die Datenübertragungseinheit 4 ist eine standardisierte Ubertragungsleitung, z. B. ein Ethernet-Koaxkabel, und weist ebenfalls standardisierte, nicht dargestellte Ubertragungselemente, wie Verstarker, Repeater oder Bridges auf. Die Datenverarbeitungseinheiten 2 sind mittels der Datenübertragungseinheit 4 zu einem Rechnernetz verbunden.

Auf Jeder Datenverarbeitungseinheit 2 sind Rechnerprogramme oder Datenverarbeitungsprogramme implementiert, mittels derer eine technische Anlage, z. B. eine Fertigungsanlage oder Werkzeugmaschine, gesteuert und/oder überwacht wird. Das Datenverarbeitungsprogramm, auch Hauptprogramm oder Anwendersoftware genannt, läuft in der Datenverarbeitungseinheit 2 zur Ansteuerung und/oder Erfassung von Ein- und/oder Ausgänge 6 zugehöriger, nicht dargestellter Peripherie-Baugruppen ab. Je nach Art und Aufbau der Datenverarbeitungsanlage 1 dient das Datenverarbeitungsprogramm einer zentralen Steuerung der Bedienung und Beobachtung der Ein- und/oder Ausgänge 6 dezentraler Datenverarbeitungseinheiten 2. Dabei sind die dezentralen Datenverarbeitungseinheiten 2 als so genannte Vor-Ort-Steuerungen zur Bedienung und Beobachtung der betreffenden Ein- und/oder Ausgänge 6 ausgebildet.

Das jeweilige Datenverarbeitungsprogramm der Datenverarbeitungsanlagen 2 ist modular aufgebaut und umfasst als Objekte eine Anzahl von Funktionsbausteinen, welche abgeschlossene Steuerungs- und/oder Regelungsfunktionen für die technische Anlage übernehmen. Mit zunehmender Vernetzung der Datenverarbeitungseinheiten 2 anhand der Datenübertragungseinheit 4, welche einfach oder redundant ausgeführt sein kann, nimmt der zur Bearbeitung der betreffenden Datenverarbeitungsprogramme erforderliche Austausch von Daten D zu. Häufig kommt es dabei zu unterschiedlichen Anforderungen bezüglich der Sicherheit und der Geschwindigkeit der Datenübertragung. Beispielsweise ist für sicherheitsrelevante Funktionen eine besonders hohe Störsicherheit bei einer langsamen Datenübertragung ausreichend, z. B. bei einer Ansteuerung von Peripheriebaugruppen. Demgegenüber ist für andere Steuerungsfunktionen eine möglichst schnelle Datenübertragung mit einer geringen Sicherheit von Bedeutung, z. B. bei einer Speicherung einer großen Menge von Daten.

Um die unterschiedlichen Anforderungen sicherzustellen, umfasst die jeweilige Datenverarbeitungseinheit 2 empfangsseitig für die unterschiedlichen Datenübertragungen zugrundeliegenden Daten mindestens ein Filter 8A und 8B, welches in Abhängigkeit von einem die jeweilige Datenübertragung charakterisierenden Protokoll die betreffenden Daten D auskoppelt. Sendeseitig umfasst die jeweilige Datenverarbeitungseinheit ein Verstärkerelement 10 und ggf. ein Widerstandselement 12.

Für Daten D, welche besonders störsicher übertragen werden, ist das Filter 8A bevorzugt als ein Tiefpass-Filter ausgeführt, welches empfangsseitig die Daten D eines ersten Protokolls mit einem ersten Frequenzbereich und einer ersten Signalfolge sowie einem ersten Signalpegel herausfiltert. Dazu umfasst das Filter 8A eine betreffende, aus Dioden 14, einem Kondensator 16 und/oder einem Widerstand 18 gebildete Tiefpass-Schaltung und ein Verstärkerelement 20. Dabei ist die Art und Ausführung des Filters 8A abhängig vom ersten Frequenzbereich, der ersten Signalfolge und/ oder dem Signalpegel.

Für Daten D, welche mit einer möglichst hohen Datenübertragungsrate zwischen den Datenverarbeitungseinheiten 2 und mit einer gegenüber den Daten D des ersten Protokolls geringeren Störsicherheit ausgetauscht werden, umfasst das Filter 8B lediglich ein Verstärkerelement 20. Ein Tiefpass-Filter kann hier entfallen. Je nach Art und Ausführung der jeweiligen Datenverarbeirtungseinheit 2, insbesondere nach der Art der zu übertragenden Daten D umfasst die Datenverarbeitungseinheit 2 eine die Filter 8A und 8B aufweisende Kommunikationsbaugruppe. Ist die Datenverarbeitungseinheit 2 lediglich für einen besonders sicheren Datenaustausch vorgesehen, so weist diese nur das Filter 8A auf. Umfasst der Datenaustausch eine Mehrzahl von verschiedenen Protokollen mit jeweils zugehorigem Frequenzbereich, zugehoriger Signalfolge und/oder zugehorigem Signalpegel, so variiert in Abhangigkeit von der Anzahl der vorgegebenen Protokolle die Anzahl der Filter 8A, 8B entsprechend.

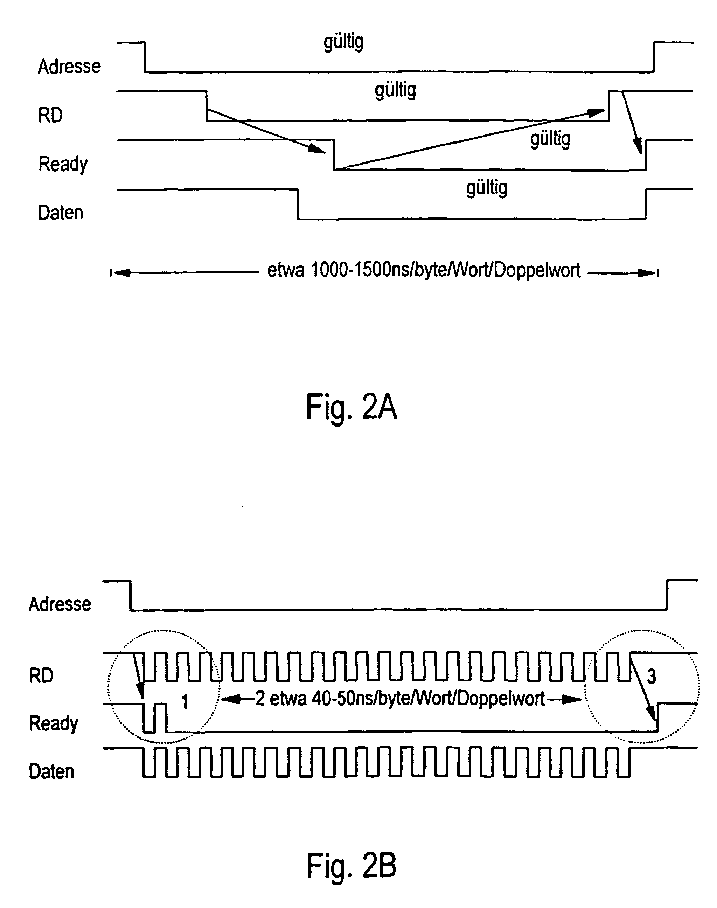

Figur 2A zeigt beispielhaft eine Signalsequenz fur Daten D eines ersten Protokolls fur einen langsamen und besonders storsicheren Datenaustausch. Figur 2B zeigt demgegenuber eine Signalsequenz für Daten D eines zweiten Protokolls für einen besonders schnellen Datenaustausch. Bei einer Datenübertragung werden die uber die Datenubertragungseinheit 4 zwischen den Datenverarbeitungseinheiten 2 auszutauschenden Daten D bevorzugt parallel in mindestens zwei Protokollen derart übertragen, dass Daten D, beispielsweise hinsichtlich der Übertragungsrate so genannte "langsame Daten", anhand des ersten Protokolls in einem ersten Frequenzbereich mit einer ersten Signalfolge und einem ersten Signalpegel und andere Daten D, beispielsweise so genannte "schnelle Daten", anhand des zweiten Protokolls in einem zweiten Frequenzbereich mit einer zweiten Signalfolge und einem zweiten Signalpegel übertragen werden.

Dabei werden die Daten D des ersten Protokolls asynchron und mit einem Quittungssignal "ready" (auch signal-handshake genannt) sowie mit einer Übertragungsrate von etwa 20 MBit/s für einen so genannten 32bit-Datenbus oder von etwa 5 MBit/s für einen so genannten 8bit-Datenbus übertragen. Zur Trennung der Daten D des ersten Protokolls von den Daten D des zweiten Protokolls werden diese bei einer Datenübertragung über ein und dieselbe Datenübertragungseinheit 4 synchron und mit einem Quittungssignal "ready" sowie mit einer Übertragungsrate von etwa 640 MBit/s für einen so genannten 32bit-Datenbus bzw. von etwa 160 MBit/s für einen so genannten 8bit-Datenbus übertragen.

Beim Aufbau der Verbindung (durch den mit Zahl "1" bezeichneten Kreis in Figur 2B dargestellt) wird beim zweiten schnellen Protokoll ein Quittungssignal (so genanntes signal-handshake) ausgetauscht, danach werden die Daten synchron übertragen (siehe Datentransferphase in Figur 2B, welche durch den mit der Zahl "2" bezeichneten Pfeil angedeutet ist). D. h. beispielsweise beim Lesen von Daten D werden diese 20ns nach einer fallenden Flanke von Signal "RD" mit steigender Flanke von Signal "RD" mittels der Datenubertragungseinheit 4 übertragen und empfangsseitig mittels der betreffenden Datenverarbeitungsanlage 2 empfangen. Der in Figur 2B dargestellte und mit "3" bezeichnete Kreis stellt die Verbindungsabbauphase dar. Kommt es bei laufender DatenÜbertragung zu einer Umschaltung des Signals "Ready" auf "High" während das Signal "RD" auf "Low" ist, wird die Datenübertragung der Daten D des zweiten Protokolls als ungültig bewertet und verworfen. Die Daten D des zweiten Protokolls werden zur Überwachung der Datenübertragung darüber hinaus mit Sicherungsdaten versehen, wie z. B. einem parity-check oder einem cyclic-redundancy-check. Die in Figuren 2A und 2B dargestellten Signalsequenzen zeigen nur eine physikalische Schicht, die mit beliebigen logischen Schichten überlagert werden kann.

Ein die Datenübertragung der Daten D repräsentierender Treiber für das erste Protokoll weist darüber hinaus bevorzugt einen Schaltpegel von 2,5 V mit einem High-Pegel (im Weiteren H-Pegel genannt) von 5V und einem Low-Pegel (im weiteren L-Pegel) von 0V auf. Zum Ausschluss von Integrationseffekten ist der Schaltpegel des ersten Treibers für das erste Protokoll symmetrisch um einen H-Pegel eines für das zweite Protokoll vorgesehenen Treibers angeordnet. Dazu wird dem Treiber für das zweite Protokoll bevorzugt ein Schaltpegel von 5 V mit einem H-Pegel von 6 V und einem L-Pegel von 4 V zugeordnet. Bedingt durch den für das zweite Protokoll vorgesehenen Treiber mit einem gegenüber dem Treiber des ersten Protokolls höheren H-Pegel von größer 5V ist das Filter 8A oder der Eingang für den Treiber des ersten Protokolls möglichst uberspannungsfest auszubilden. Je nach Art und Anzahl der den Datenaustausch repräsentierenden Protokolle konnen weitere Schaltpegel oder andere Werte für die Schaltpegel vorgesehen sein.

## Patentansprüche

1. Verfahren zur Übertragung von Daten (D) über eine Datenübertragungseinheit (4) zwischen Datenverarbeitungseinheiten (2) einer Datenverarbeitungsanlage (1), wobei Daten (D) parallel in mindestens zwei Protokollen derart übertragen werden, dass anhand eines ersten Protokolls Daten (D) in einem ersten Frequenzbereich mit einer ersten Signalfolge und einem ersten Signalpegel und anhand eines zweiten Protokolls weitere Daten (D) in einem zweiten Frequenzbereich mit einer zweiten Signalfolge und einem zweiten Signalpegel übertragen werden, **dadurch gekennzeichnet, dass** ein Schaltpegel des ersten Protokolls sich von einem Schaltpegel des zweiten Protokolls unterscheidet.

2. Verfahren nach Anspruch 1, bei dem die Daten (D) des ersten Protokolls asynchron und mit einem Quittungssignal übertragen werden.

3. Verfahren nach Anspruch 1 oder 2, bei dem die Daten (D) des zweiten Protokolls synchron und mit einem Quittungssignal übertragen werden.

4. Verfahren nach einem der Ansprüche 1 bis 3, bei dem die Daten (D) des zweiten Protokolls mit Sicherungsdaten versehen werden.

5. Verfahren nach einem der Ansprüche 1 bis 4, bei dem die Daten (D) des ersten Protokolls mit einer Übertragungsrate von etwa 20 MBit/s übertragen werden.

6. Verfahren nach einem der Anspruche 1 bis 5, bei dem die Daten (D) des zweiten Protokolls mit einer Ubertragungsrate von etwa 640 MBit/s übertragen werden.

7. Verfahren nach einem der Anspruche 1 bis 6, bei dem einem für das erste Protokoll vorgesehenen Treiber ein derartiger Schaltpegel zugeordnet wird, der symmetrisch um einen H-Pegel eines für das zweite Protokoll vorgesehenen Treibers angeordnet ist.

8. Verfahren nach Anspruch 7, bei dem dem Treiber für das erste Protokoll ein Schaltpegel von 2,5 V mit einem H-Pegel von 5V und einem L-Pegel von 0 V zugeordnet wird.

9. Verfahren nach Anspruch 7 oder 8, bei dem dem Treiber für das zweite Protokoll ein Schaltpegel von 5 V mit einem H-Pegel von 6 V und einem L-Pegel von 4 V zugeordnet wird.

10. Datenverarbeitungsanlage (1) mit einer Mehrzahl von Datenverarbeitungseinheiten (2), welche über eine Datenübertragungseinheit (4) miteinander verbunden sind, wobei Daten (D) verschiedener Anforderungen auf der Datenübertragungseinheit (4) parallel in mindestens zwei Protokollen derart übertragen werden, dass sendeseitig anhand eines ersten Protokolls Daten (D) in einem ersten Frequenzbereich mit einer ersten Signalfelge und einem ersten Signalpegel und anhand eines zweiten Protokolls weitere Daten (D) in einem zweiten Frequenzbereich mit einer zweiten Signalfolge und einem zweiten Signalpegel übertragen werden, **dadurch gekennzeichnet, dass** ein Schaltpegel des ersten Protokolls sich von einem Schaltpegel des zweiten Protokolls unterscheidet und wobei empfangsseitig für die Daten (D) ein dem jeweiligen Protokoll zugehöriges Filter (8A, 8H) vorgesehen ist.

## Claims

1. Method for the transmission of data (D) via a data transmission unit (4) between data processing units (2) in a data processing system (1), whereby data (D) is transmitted in parallel in at least two protocols in such a way that a first protocol is used to transmit data (D) in a first frequency range using a first signal sequence and a first signal level, and a second protocol is used to transmit further data (D) in a second frequency range using a second signal sequence and a second signal level, **characterized in that** a switching level of the first protocol is different from a switching level of the second protocol.

2. Method in accordance with claim 1, for which the data (D) for the first protocol is transmitted asynchronously and with an acknowledgment signal.

3. Method in accordance with claim 1 or 2, for which the data (D) for the second protocol is transmitted synchronously and with an acknowledgment signal.

4. Method in accordance with one of the claims 1 to 3, for which the data (D) for the second protocol includes security data.

5. Method in accordance with one of the claims 1 to 4, for which the data (D) for the first protocol is transmitted at a transmission rate of around 20 Mbit/sec.

6. Method in accordance with one of the claims 1 to 5, for which the data (D) for the second protocol is transmitted at a transmission rate of around 640 Mbit/sec.

7. Method in accordance with one of the claims 1 to 6, whereby a driver provided for the first protocol is assigned a switching level which is such that it is arranged to be symmetrical about an H-level of a driver provided for the second protocol.

8. Method in accordance with claim 7, whereby the driver for the first protocol is assigned a switching level of 2.5 V, with an H-level of 5V and an L-level of 0V.

9. Method in accordance with claim 7 or 8, whereby the driver for the second protocol is assigned a switching level of 5 V, with an H-level of 6 V and an L-level of 4 V.

10. Data processing system (1) with numerous data processing units (2), which are linked together by a data transmission unit (4), whereby data (D) with different requirements is transmitted in parallel on the data transmission unit (4) in at least two protocols, in such a way that at the transmitting end a first protocol is used to transmit data (D) in a first frequency range with a first signal sequence and a first signal level and a second protocol is used to transmit further data (D) in a second frequency range with a second signal sequence and a second signal level, **characterized in that** a switching level for the first protocol differs from a switching level for the second protocol and whereby at the receiving end there is a filter (8A, 8B) associated with the protocol concerned.

## Revendications

1. Procédé de transmission de données (D) par une unité (4) de transmission de données entre des unités (2) de traitement de données d'un système (1) de traitement de données, des données (D) étant transmises en parallèle dans au moins deux protocoles de façon à ce que, au moyen d'un premier protocole, des données (D) soient transmises dans un premier domaine de fréquences avec une première suite de signaux et un premier niveau de signal et, au moyen d'un deuxième protocole, d'autres données (D) sont transmises dans un deuxième domaine de fréquences avec une deuxième suite de signaux et un deuxième niveau de signal, **caractérisé en ce qu'**un niveau de commutation du premier protocole se distingue d'un niveau de commutation du deuxième protocole.

2. Procédé suivant la revendication 1, dans lequel les données (D) du premier protocole sont transmises de manière asynchrone et avec un signal d'accusé de réception.

3. Procédé suivant la revendication 1 ou 2, dans lequel les données (D) du deuxième protocole sont transmises de manière synchrone et avec un signal d'accusé de réception.

4. Procédé suivant l'une des revendications 1 à 3, dans lequel les données (D) du deuxième protocole sont munies de données de sécurité.

5. Procédé suivant l'une des revendications 1 à 4, dans lequel les données (D) du premier protocole sont transmises à un débit de transmission d'environ 20 MBits/s.

6. Procédé suivant l'une des revendications 1 à 5, dans lequel les données (D) du deuxième protocole sont transmises à un débit de transmission d'environ 640 MBits/s.

7. Procédé suivant l'une des revendications 1 à 6, dans lequel, à un circuit d'attaque prévu pour le premier protocole, est associé un niveau de commutation tel qu'il est symétrique par rapport à un niveau H d'un circuit d'attaque prévu pour le deuxième protocole.

8. Procédé suivant la revendication 7, dans lequel, au circuit d'attaque pour le premier protocole, est associé un niveau de commutation de 2,5 V ayant un niveau H de 5 V et un niveau L de 0 V.

9. Procédé suivant la revendication 7 ou 8, dans lequel, au circuit d'attaque pour le deuxième protocole, est associé un niveau de commutation de 5 V ayant un niveau H de 6 V et un niveau L de 4 V.

10. Système (1) de traitement de données comprenant une multiplicité d'unités (2) de traitement de données qui sont reliées entre elles par une unité (4) de transmission de données, des données (D) d'exigence différente étant transmises sur l'unité (4) de transmission de données en parallèle dans au moins deux protocoles, de façon à ce que, du côté de l'émission, soit transmises, au moyen d'un premier protocole, des données (D) dans un premier domaine de fréquences avec une première suite de signaux et un premier niveau de signal et, au moyen d'un deuxième protocole, d'autres données (D) dans un deuxième domaine de fréquences avec une deuxième suite de signaux et un deuxième niveau de signal, **caractérisé en ce qu'**un niveau de commutation du premier protocole se distingue d'un niveau de commutation du deuxième protocole, et du côté de la réception des données (D), il est prévu un filtre (8A, 8B) associé au protocole respectif.
